# EUROPEAN PATENT APPLICATION

(11) **EP 2 495 131 A1**
(43) Date of publication of application: **05.09.2012**
(21) Application number: 10826496.1
(22) Date of filing: 08.10.2010
(51) Int. Cl.: B60R 5/04

(54) **COVER APPARATUS FOR VEHICLE**

(30) Priority: 30.10.2009 JP 2009250137
(71) Applicant: Ashimori Industry Co., Ltd., Osaka-shi Osaka 550-0014 (JP)
(72) Inventor: TAKEMURA Seiji, Settsu-shi Osaka 566-0001 (JP); MARUYAMA Kenta, Settsu-shi Osaka 566-0001 (JP)
(74) Representative: Wilhelms · Kilian & Partner Patentanwälte
(86) International application number: PCT/JP2010/067776
(87) International publication number: WO 2011/052362

(57) **Abstract**

It is aimed to shield gaps between a plurality of covers in a case where a cover apparatus for a vehicle allows the plurality of covers to be drawn toward approximately the same direction along approximately the same plane. A cover apparatus for a vehicle includes: a center cover windup part (30) including a center cover (32) and a center windup shaft part (34) that houses the center cover (32) so as to be drawn therefrom and wound therearound; and side cover windup parts (40) each including a side cover (42) and a side windup shaft part (44) that houses the side cover (42) so as to be drawn therefrom and wound therearound. The center windup shaft part (34) and the side windup shaft parts (44) are supported with axes (X1, X2) thereof being displaced from each other and end portions thereof overlapping each other in the axis directions thereof so that side edges of the center cover (32) and side edges of the side covers (42) overlap each other in the state in which center cover (32) and the side covers (42) are drawn.

## Description

### Technical Field

The present invention relates to a cover apparatus for a vehicle that covers a luggage compartment, side window, roof window or the like in a vehicle.

### Background Art

Patent Document 1 discloses a tonneau cover apparatus that covers a luggage compartment of a vehicle.

Patent Document 1 discloses the configuration that allows luggage covers divided into a plurality of pieces to be individually housed and drawn. Also disclosed is the configuration in which the luggage covers are connected to each other with a fastener in the state in which the divided luggage covers are drawn.

### Prior Art Document

### Patent Document

Patent Document 1: Japanese Utility Model Laid-Open No. 58-65152 (1983)

### Summary of the Invention

### Problem to be Solved by the Invention

In Patent Document 1, shafts of windup tubes for winding up the divided luggage covers are disposed to be collinear with each other. In this case, the space for rotatably holding end portions of the windup tubes is required between the windup tubes. This generates a gap between the luggage covers that are respectively drawn from the windup tubes. The configuration is made such that the divided luggage covers are connected to each other with a fastener for eliminating this gap, and thus opening/closing operations with a fastener are cumbersome.

Therefore, an object of the present invention is to shield gaps between a plurality of covers in a case where the plurality of covers are configured to be drawn toward approximately the same direction along approximately the same plane.

### Means to Solve the Problem

In order to solve the above-mentioned problem, a cover apparatus for a vehicle according to a first aspect includes: a plurality of cover windup parts each including a cover and a windup shaft part housing the cover so as to be drawn therefrom and wound therearound; and a support member supporting the windup shaft parts of the plurality of cover windup parts so that the covers of the plurality of cover windup parts are drawn toward approximately the same direction in an approximately parallel state to be extendable along approximately the same plane, wherein the adjoining windup shaft parts are supported with axes thereof being displaced from each other and end portions thereof overlapping each other in the axis directions thereof so that side edges of the adjoining covers in a state of being drawn overlap each other.

According to a second aspect, in the cover apparatus for a vehicle of the first aspect, the adjoining windup shaft parts are disposed so as to wind up and house the covers in the same windup direction, with the axes thereof being displaced from each other along the drawing directions of the covers.

According to a third aspect, in the cover apparatus for a vehicle of the first or second aspect: the plurality of cover windup parts include a center cover windup part including a center cover covering a center portion in a vehicle width direction of a luggage compartment of a vehicle, and a pair of side cover windup parts including side covers covering side portions in the vehicle width direction of the luggage compartment of the vehicle, next to the center cover; and both side edges of the center cover are disposed so as to respectively overlap side edges on a center portion side in the vehicle width direction of the side covers of the pair of side cover windup parts.

According to a fourth aspect, in the cover apparatus for a vehicle of the third aspect, a center interlocking part disengageable from a back door of the vehicle is provided at an end portion on a tip side in a drawing direction of the center cover, and side interlocking parts disengageable from side walls of the luggage compartment of the vehicle are provided at end portions on a tip side in a drawing direction of the pair of side covers.

According to a fifth aspect, in the cover apparatus for a vehicle of the fourth aspect: the center cover includes, on both sides thereof, narrow side edges formed so as to be narrower than the end portions on the tip side in the drawing direction correspondingly to an opening for a back door of the vehicle, the opening becoming gradually narrower upward; and the side edges on the center portion side in the vehicle width direction of the pair of side covers have a shape so as to respectively overlap the narrow side edges on the both sides of the center cover in a state in which the center cover and the pair of side covers are drawn.

According to a sixth aspect, in the cover apparatus for a vehicle of any one of the third to fifth aspects, side interlocking parts disengageable from side walls of the luggage compartment of the vehicle are provided at edges on the tip side in the drawing direction of the pair of side covers, each of said side interlocking parts being positioned at approximately the center in the axis direction of the windup shaft part housing the side cover.

According to a seventh aspect, the cover apparatus for a vehicle of any one of the third to sixth aspects further includes a front cover windup part including a front cover and a front cover windup shaft part housing the front cover so as to be drawn therefrom and wound therearound, wherein the front cover windup shaft part is supported by the support member so that the front cover is extendable between the support member and a rear seat of the vehicle.

### Effects of the Invention

According to the cover apparatus for a vehicle of the first aspect, the adjoining windup shaft parts are supported with axes thereof being displaced from each other and edges thereof overlapping each other in the axis directions thereof so that the side edges of the adjoining covers in the drawn state overlap each other. Accordingly, the side edges of the adjoining covers overlap each other when a plurality of covers are drawn. This shields the gaps between the plurality of covers.

According to the cover apparatus for a vehicle of the second aspect, the adjoining windup shaft parts are disposed with the axes thereof being displaced from each other along the drawing directions of the covers, which reduces the space for supporting and housing the windup shaft parts. Further, the covers are housed in the adjoining windup shaft parts in the same windup direction, whereby it is possible to draw both covers on the same plane such that the side edge of the cover housed in the windup shaft part on the upper side in the drawing direction overlaps the side edge of the cover housed in the windup shaft part on the lower side in the drawing direction in an intimate contact manner.

According to the third aspect, it is possible to easily draw and wind up the center cover while the side covers are drawn.

According to the fourth aspect, the center cover can be drawn and wound in conjunction with opening/closing of the back door.

According to the fifth aspect, it is possible to draw and wind up the center cover in conjunction with opening/closing of the back door while avoiding interference with the back door opening. In addition, the gaps between the center cover and the side covers can be shielded in the state in which the center cover is drawn.

According to the sixth aspect, it is possible to hold the state in which the side covers are extended while suppressing the generation of wrinkles.

According to the cover apparatus for a vehicle of the seventh aspect, it is possible to configure the front cover by being integrated with the support member as well in a compact manner.

### Brief Description of Drawings

FIG. 1 is a perspective view showing an overall configuration of a cover apparatus for a vehicle according to an embodiment.
FIG. 2 is a partial plan view showing the cover apparatus for a vehicle.
FIG. 3 is a side view showing the cover apparatus for a vehicle.
FIG. 4 is a cross-sectional view taken along a line IV-IV of FIG. 2.
FIG. 5 is an explanatory view showing a state in which the cover apparatus for a vehicle is mounted onto a vehicle.
FIG. 6 is an explanatory view showing a state in which the cover apparatus for a vehicle is mounted onto the vehicle.
FIG. 7 is an explanatory view showing a state in which the cover apparatus for a vehicle is mounted onto the vehicle.
FIG. 8 is an explanatory view showing a state in which a side interlocking part of a side cover is interlocked.
FIG. 9 is an explanatory view showing a comparative example.
FIG. 10 is an explanatory view showing the relationship between the side cover and a center cover.
FIG. 11 is an explanatory view showing a modification.

### Embodiments for Carrying Out the Invention

A cover apparatus for a vehicle according to an embodiment is described below. Described here is an example in which the cover apparatus for a vehicle covers a luggage compartment of a vehicle. Needless to say, the cover apparatus for a vehicle per se is applicable as the configuration of covering, in a planer fashion, various portions such as a roof window, side window and rear window in addition to covering a luggage compartment.

### <Overall configuration>

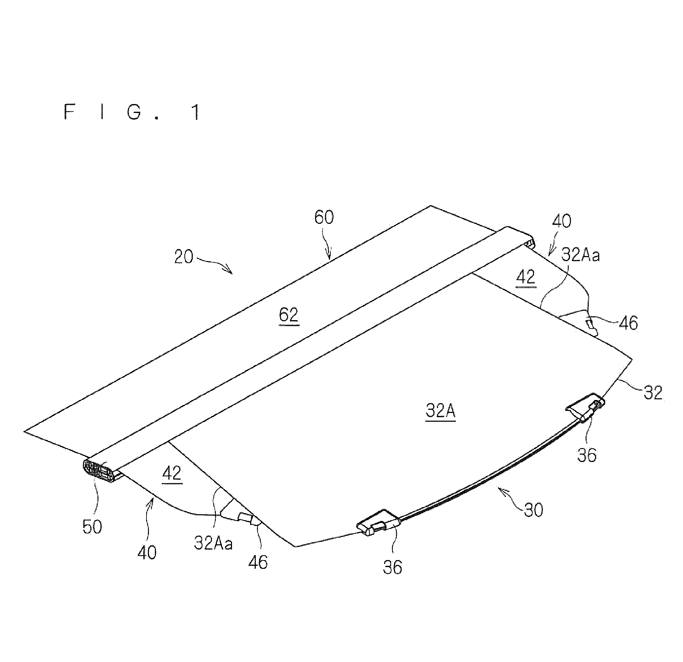

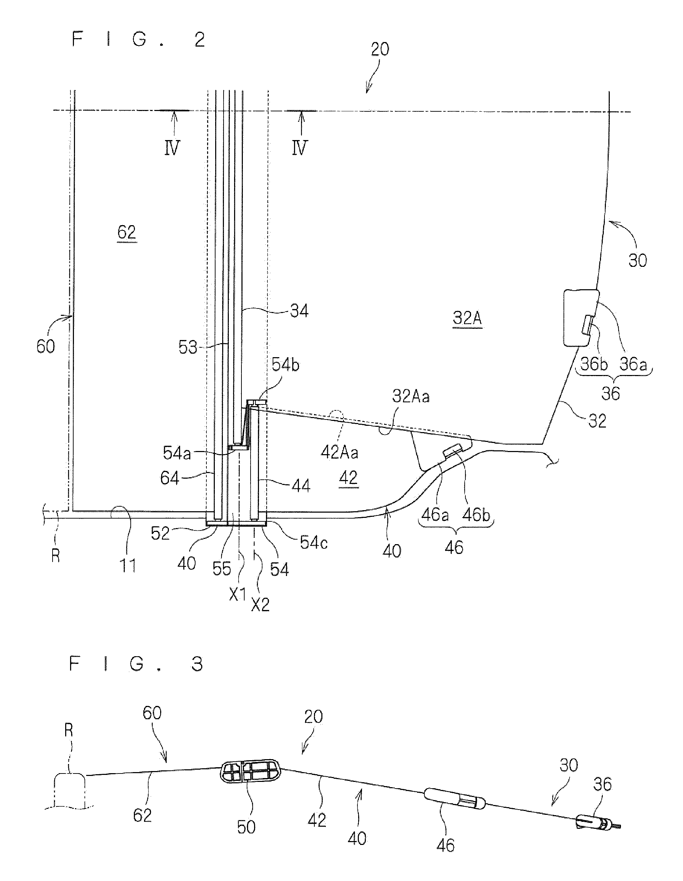

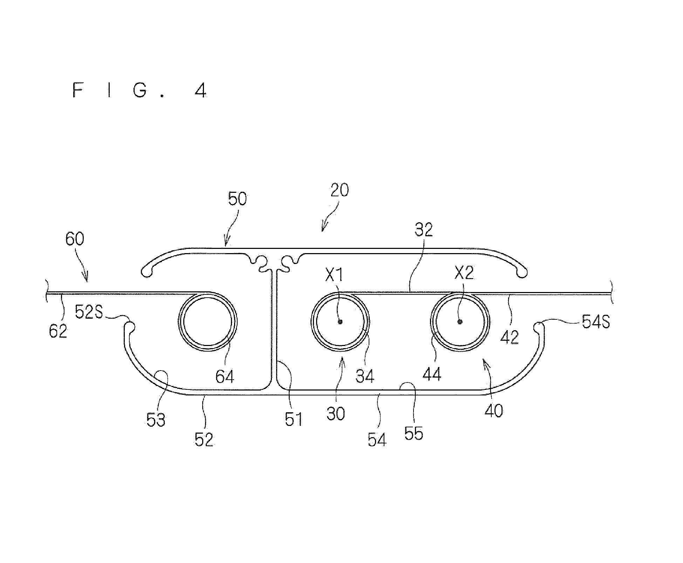

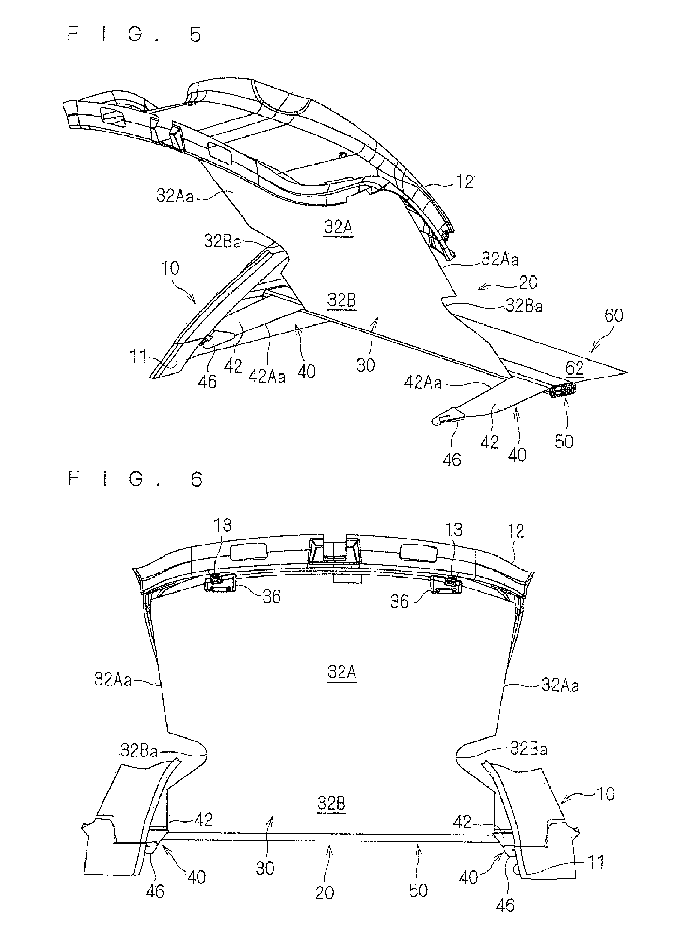

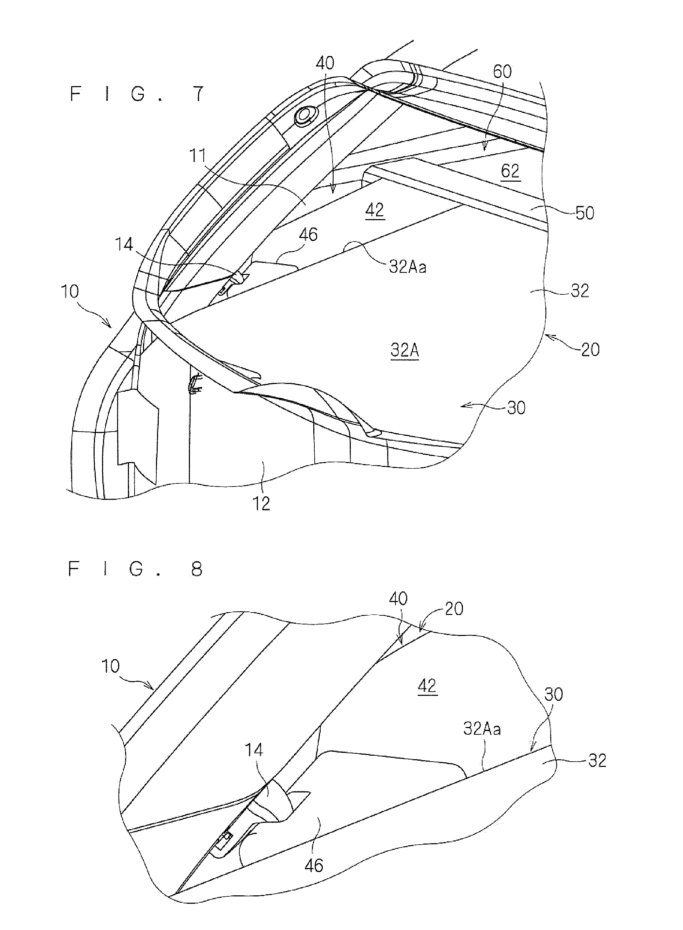

FIG. 1 is a perspective view showing an overall configuration of a cover apparatus for a vehicle 20, FIG. 2 is a partial plan view showing the cover apparatus for a vehicle 20, FIG. 3 is a side view showing the cover apparatus for a vehicle 20, and FIG. 4 is a cross-sectional view taken along a line IV-IV of FIG. 2. In FIG. 1 to FIG. 3, the cover apparatus for a vehicle 20 is deployed. FIG. 5 to FIG. 7 show the state in which the cover apparatus for a vehicle 20 is mounted onto a vehicle 10. In particular, FIG. 5 is a perspective view of the cover apparatus for a vehicle 20 in a state in which a back door 12 is opened, FIG. 6 is a rear view of the cover apparatus for a vehicle 20 in the state in which the back door 12 is opened, and FIG. 7 is a partial perspective view of the cover apparatus for a vehicle 20 in a state in which the back door 12 is closed.

As shown in those views, the cover apparatus for a vehicle 20 is provided in the vehicle 10 that has a luggage compartment 11 on a back portion thereof. The luggage compartment 11 is open in the back portion thereof, and an opening thereof is opened/closed by the back door 12. In this case, the back door 12 is configured to be opened/closed via a hinge part provided in an upper portion of the opening. Provided in the front portion of the luggage compartment 11 is a seat back part of a rear seat R (see FIG. 2 and FIG. 3), and the luggage compartment 11 is in communication with a passenger-side room through the space above the seat back part.

The cover apparatus for a vehicle 20 is provided so as to cover the luggage compartment 11 behind the upper end portion of the seat back part and serves to prevent a luggage placed within the luggage compartment 11 from being seen from the outside.

The cover apparatus for a vehicle 20 includes a center cover windup part 30 and a pair of side cover windup parts 40 as a plurality of cover windup parts, and further includes a support member 50 that supports those.

The center cover windup part 30 includes a center cover 32 that covers a center portion in the vehicle width direction of the luggage compartment 11 of the vehicle 10 and a center windup shaft part 34 that houses the center cover 32 so as to be drawn therefrom and wound therearound. The side cover windup part 40 includes a side cover 42 that covers, next to the center cover 32, the side portion in the vehicle width direction of the luggage compartment 11 of the vehicle 10 and a side windup shaft part 44 that houses the side cover 42 so as to be drawn therefrom and wound therearound.

Various configurations including a typical windup structure capable of drawing and winding up a seat-like member can be employed as the center windup shaft part 34 and the side windup shaft part 44. More specifically, for example, it is possible to employ the configuration in which windup shaft parts are rotatably supported between both support end portions that are supported by the support member 50 so as not to rotate, and windup biasing springs such as a coil spring or a mainspring are interposed between the both support end portions and the windup shaft parts, so that the windup shaft parts are biased in a predetermined windup rotation direction, as the center cover windup shaft part 34 and the side windup shaft part 44.

The center cover 32 and the side cover 42 are seat-like members that are formed of a cloth, resin or the like and can be wound up and extended in a planar fashion. The proximal end portions of the center cover 32 and the side cover 42 are connected to the center windup shaft part 34 and the side windup shaft part 44, respectively. More specific shapes of the center cover 32 and the side cover 42 are described below.

The support member 50 is configured so as to support the pair of side windup shaft parts 44 and the center windup shaft part 34 in a state in which the pair of side windup shaft parts 44 are disposed on both sides of the center windup shaft part 34 such that the center cover 32 and the pair of side covers 42 are extendable along approximately the same plane (in this case, plane that covers an upper portion of the luggage compartment 11) toward approximately the same direction (in this case, from the front to the rear of a vehicle) in a state in which those are approximately parallel to each other.

A more specific configuration in which the support member 50 supports the center windup shaft part 34 and the pair of side windup shaft parts 44 is described below.

The support member 50 is supported so as to be positioned along the vehicle width direction at the front position of the luggage compartment 11 (more specifically, the rear position at an upper end portion of the seat back part of the rear seat R). The support structure of the support member 50 is achieved by, for example, a structure in which both end portions thereof are inserted into recesses of both side wall portions of the luggage compartment 11.

The edge on the tip side in the drawing direction of the center cover 32 is configured so as to be disengaged from an inner surface portion of the back door 12, and the edges on the tip side in the drawing direction of the pair of side covers 42 are respectively configured so as to be disengaged from the side walls of the luggage compartment 11.

In a state in which the edge on the tip side in the drawing direction of the center cover 32 is interlocked with the inner surface part of the closed back door 12 and the edges on the tip side in the drawing direction of the pair of side covers 42 are respectively interlocked with the side walls of the luggage compartment 11, the center cover 32 and the pair of side covers 42 cover an almost entire opening in the upper portion of the luggage compartment 11 (see FIG. 7).

When the back door 12 is opened in the above-mentioned state, the edge on the tip side in the drawing direction of the center cover 32 is moved upward, and the center cover 32 is lifted obliquely upward toward the rear portion of the vehicle 10, which forms an opening allowing easy access to the luggage compartment 11 from a back door opening being a rear opening of the luggage compartment 11 (luggage can be loaded and unloaded) (see FIG. 5 and FIG. 6).

When interlocking of the edge on the tip side in the drawing direction of the center cover 32 or the edges on the tip side in the drawing direction of the pair of side covers 42 is released in any of the above-mentioned states, the center cover 32 or pair of side covers 42 whose interlocking was released is wound by the center windup shaft part 34 or the side windup shaft parts 44, with the result that an upper portion of the luggage compartment 11 is partially or entirely opened.

More specific disengaging structures of the edge on the tip side in the drawing direction of the center cover 32 and the edges on the tip side in the drawing direction of the pair of side covers 42 are described below.

The above-mentioned cover apparatus for a vehicle 20 is capable of covering an upper portion of the luggage compartment 11 with most of the gap concealed by means of the center cover 32 and the pair of side covers 42. For example, when the back door 12 is opened, the center cover 32 can be partially lifted upward or wound up to be housed, which makes loading/unloading of luggage into/from the luggage compartment 11 easy.

### <Positional relationship between windup shaft parts>

The positional relationship between the center windup shaft part 34 and the side windup shaft parts 44 is described.

That is, the support member 50 supports the adjoining center windup shaft part 34 and side windup shaft parts 44 with center axes X1 and X2 being displaced from each other and edges thereof overlapping each other in the directions of the axes X1 and X2 such that the side edges of the adjoining center cover 32 and both side covers 42 overlap each other in the state in which the center cover 32 and the pair of side covers 42 are drawn (see FIG. 2 and FIG. 4).

More specifically, the support member 50 is a member formed of a resin or the like, and includes a front frame part 52 and a rear frame part 54.

Formed in the rear frame part 54 is an elongated inner space 55 along the vehicle width direction. A pair of center windup shaft part supporting parts 54a capable of supporting both end portions of the center windup shaft part 34 are provided in the portions that are located on the vehicle front side of the elongated inner space 55 and also located on the sides closer to the center portion in the vehicle width direction with respect to both end portions of the rear frame part 54 (FIG. 2 shows only one thereof having a symmetrical shape). Both end portions of the center windup shaft part 34 are rotatably supported by the pair of center windup shaft part supporting parts 54a, whereby the center windup shaft part 34 is supported such that the center cover 32 is housed so as to be drawn therefrom and wound therearound. A pair of side windup shaft part supporting parts 54b capable of supporting the end portions of the side windup shaft parts 44 are provided in the portions that are located on the vehicle rear side and also located on the sides closer to the center portion in the vehicle width direction with respect to the center windup shaft part supporting parts 54a in the elongated inner space 55 (FIG. 2 shows only one thereof having a symmetrical shape). The end portion at the center portion in the vehicle width direction of the side windup shaft part 44 is rotatably supported by the side windup shaft part supporting part 54b on one side, while the end portion on the lateral side in the vehicle width direction of the side windup shaft part 44 is rotatably supported by an end portion 54c on one side of the rear frame part 54. Accordingly, the side windup shaft part 44 is supported such that the side cover 42 is housed so as to be drawn therefrom and wound therearound.

Further, a slit-like cover drawing port 54S along the vehicle width direction is formed on the vehicle rear portion of the rear frame part 54. The center cover 32 and the pair of side covers 42 are drawn to the outside through the cover drawing port 54S.

In the above-mentioned support structure, the center windup shaft part 34 and the pair of side windup shaft parts 44 wind up and house the center cover 32 and the side covers 42, respectively, in the same windup direction. In the directions of the center axes X1 and X2, both end portions of the center windup shaft part 34 are disposed to overlap the end portions on the center portion side in the vehicle width direction of the side windup shaft parts 44. The center axis X1 of the center windup shaft part 34 and the center axes X2 of the pair of side windup shaft parts 44 are disposed to be displaced from each other, in this case, displaced in the front-rear direction being the drawing direction of the center cover 32 and the side covers 42. Further, both side edges of the center cover 32 in the center windup shaft part 34 on the vehicle front side being the upper side in the drawing direction overlap the side edges on the center portion side in the vehicle width direction of the side covers 42 in the side windup shaft part 44 on the vehicle rear side being the lower side in the drawing direction in an intimate contact manner, so that the center cover 32 and the side covers 42 are drawn on approximately the same plane.

Through the above, both side edges of the center cover 32 can overlap the side edges at the center portion in the vehicle width direction of the pair of side covers 42 in an intimate contact manner in the state in which the center cover 32 and the pair of side covers 42 are drawn, and gaps therebetween can be shielded. Moreover, in the state in which the pair of side covers 42 are drawn, the center cover 32 can be easily drawn and wound up thereabove, and besides, for example, the center cover 32 can be easily lifted upward.

Further, a front cover windup part 60 is incorporated into the front frame part 52 of the support member 50.

That is, an elongated inner space 53 along the vehicle width direction is formed in the front frame part 52. In addition, a drawing port 52S extending along the vehicle width direction is formed in the portion on the front side of the front frame part 52. Note that the rear frame part 54 and the front frame part 52 are partitioned by a partition 51.

The front cover windup part 60 includes a front cover 62 that covers a portion located above the luggage compartment 11 between the support member 50 and the rear seat R, and a front windup shaft part 64 that houses the front cover 62 so as to be drawn therefrom and wound therearound. Similarly to the center windup shaft part 34, the front windup shaft part 64 houses the front cover 62 so as to be drawn therefrom and wound therearound. Both end portions of the front windup shaft part 64 are rotatably supported by both end portions of the front frame part 52 in the front frame part 52. The front cover 62 is drawn to the outside through the drawing port 52S. Then, the front windup shaft part 64 is supported by the support member 50 such that the front cover 62 is extendable between the support member 50 and the rear seat R.

A front interlocking part disengageable from a rear seat portion or a room-side wall portion close to the rear seat is provided on the edge on the tip side in the drawing direction of the front cover 62 (not shown), and an extended state is maintained by the front interlocking part.

### <Cover shape>

Description is given of the shapes of the center cover 32 and the pair of side covers 42.

As described above, the edge on the tip side of the center cover 32 is interlocked with the inner surface of the back door in a disengageable manner. When the back door 12 is opened, the edge on the tip side of the center cover 32 is lifted while the center cover 32 is drawn. On this occasion, the center cover 32 is interlocked with the inner surface of the opened back door 12 that is opened through the back door opening of the luggage compartment. The back door opening of the luggage compartment 11 has a shape so as to become gradually narrower in the vehicle width direction upwardly. For this reason, it is preferable that the center cover 32 be formed in a shape so as to suppress interference with both side end portions of the back door opening of the luggage compartment 11. In view of the above, the center cover 32 includes, on both sides thereof, narrow side edges 32Aa formed to have a narrower width compared with the edges on the tip side in the drawing direction, correspondingly to the back door opening whose width becomes gradually smaller upwardly.

More specifically, the center cover 32 includes a first extension part 32A that extends above the luggage compartment 11 in the state in which the back door 12 is closed (see FIG. 1, FIG. 2 and FIG. 7) and a second extension part 32B that is further drawn in the state in which the back door 12 is opened (see FIG. 5 and FIG. 6). Both side portions of the first extension part 32A are formed as the narrow side edges 32Aa that become gradually narrower toward the proximal end side in the drawing direction. The portions of both side portions of the second extension part 32B, which are disposed in both side portions of the back door opening in the state in which the back door 12 is opened most, are formed as curved recess side edges 32Ba that are recessed in a curved shape toward the center portion side in the vehicle width direction. The narrow side edges 32Aa and the curved recess side end portions 32Ba suppress the side edges of the center cover 32 from interfering with the side edges of the back door opening when the back door 12 is opened.

In the state in which the back door 12 is closed and the center cover 32 is wound by the center windup shaft part 34, the portions in which the curved recess side edges 32Ba are formed are wound by the center windup shaft parts 34.

Side edges on the center portion side in the vehicle width direction of the pair of side covers 42 have a shape so as to overlap the narrow side edges 32Aa on both sides of the center cover 32 in the state in which the center cover 32 and the pair of side covers 42 are drawn (see FIG. 2). In this case, the narrow side edges 32Aa of the center cover 32 form oblique lines that become gradually narrower toward the proximal end in the drawing direction, and accordingly the side edges on the center portion side in the vehicle width direction of the pair of side covers 42 are formed as inclined side edges 42Aa that are inclined (become gradually wider) with respect to the center portion side in the vehicle width direction, toward the proximal end side in the drawing direction, correspondingly to the inclined shape.

As a result, in the state in which the back door 12 is closed and the center cover 32 and the pair of side covers 42 are extended above the luggage compartment 11, the narrow side edges 32Aa of the center cover 32 and the inclined side edges 42Aa on the center portion side in the vehicle width direction of the pair of side covers 42 extend while overlapping each other in approximately the same direction, so that gaps therebetween are shielded.

### <Interlocking structures of center cover and side cover>

Description is given of the interlocking structures of the center cover 32 and the side covers 42.

Provided at the edge on the tip side in the drawing direction of the center cover 32 are center interlocking parts 36. The center interlocking part 36 is configured to be disengageable from a hook member 13 provided on the inner surface of the back door 12 (see FIG. 2 and FIG. 6). In this case, a pair of center interlocking parts 36 are provided with an interval therebetween in the vehicle width direction, at the edge on the tip side in the drawing direction of the center cover 32. The center interlocking part 36 is configured such that a recess is formed at the end portion of a center interlocking main body 36a formed of a resin or the like, and a rod-like member 36b is disposed in the recess. Then, the hook member 13 provided on the inner surface of the back door 12 and the center interlocking part 36 are configured so as to be connected in a disengageable manner.

Formed at the edge on the tip side in the drawing direction of each side cover 42 is a side interlocking part 46 capable of being disengaged from a vehicle-rear-side portion of the side wall of the luggage compartment 11 (see FIG. 2, FIG. 7 and FIG. 8). For example, the side interlocking part 46 is configured such that a recess is formed in an outwardly inclined portion of a side interlocking main body 46a that is formed from a resin or the like in an approximately triangular shape, and a rod-like member 46b is provided in the recess. Then, a hook member 14 provided to the side portion of the luggage compartment 11 and the side interlocking part 46 are configured so as to be connected in a disengageable manner.

The side interlocking part 46 is provided at approximately the center (including the case of the center) in the axis X2 direction of the side windup shaft part 44 so as to be disengageable from the luggage compartment 11. That is, the position at which the side interlocking part 46 is disengaged from the side wall of the luggage compartment 11 is set so as to be positioned at approximately the center in the axis X2 direction of the side windup shaft part 44 (see FIG. 2). Accordingly, the side cover 42 is supported by being pulled while keeping balance side by side in the state in which the side interlocking part 46 is interlocked with the side wall of the luggage compartment 11, which suppresses the side cover 42 from becoming wrinkled.

The above-mentioned interlocking structure in which the center interlocking main body and the back door are disengageable from each other and the interlocking structure in which the side interlocking part and the luggage compartment side wall are disengageable from each other are not limited to the above-mentioned examples, and various hook structures can be employed.

### <Action>

The action of the cover apparatus for a vehicle 20 configured as described above is described.

First, in a case of use in the state where the upper portion of the luggage compartment 11 is opened, interlocking of the center interlocking parts 36 with the back door 12 and interlocking of the side interlocking parts 46 with the side walls of the luggage compartment 11 are respectively released, so that the center cover 32 and the pair of side covers are wound and housed.

In a case of use in the state where the upper portion of the luggage compartment 11 is covered, the center cover 32 is drawn such that the center interlocking parts 36 are interlocked with the back door 12, and the pair of side covers 42 are drawn such that the side interlocking parts 46 are interlocked with the side walls of the luggage compartment 11. On this occasion, both side edges of the center cover 32 and the side edges on the center portion side in the vehicle width direction of the pair of side covers 42 overlap each other, so that gaps therebetween are almost shielded (see FIG. 2 and FIG. 7). Accordingly, the upper portion of the luggage compartment 11 is almost entirely covered without any gap in plan view.

Needless to say, use may be allowed in the state in which at least one of the center cover 32 and the pair of side covers 42 is drawn.

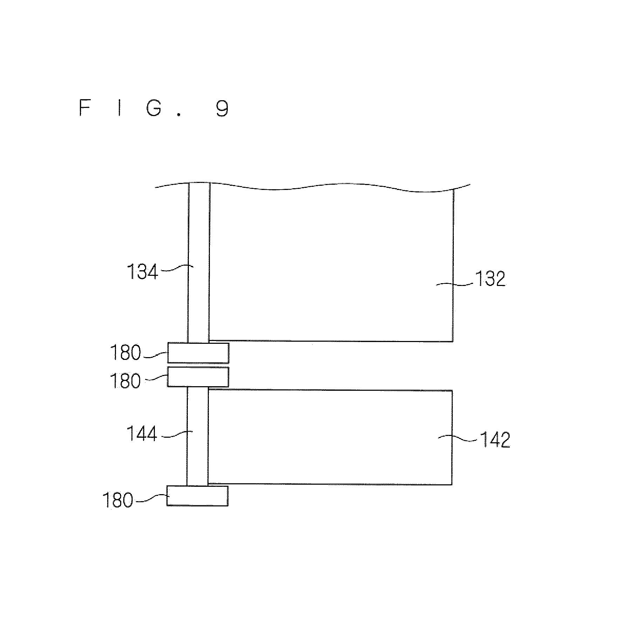

Incidentally, it is assumed that, as in a comparative example shown in FIG. 9, a center windup shaft part 134 for a center cover 132 is disposed to be collinear with a side windup shaft part 144 for a side cover 142 with the center axes thereof coinciding with each other. In this case, holding parts 180 of the center windup shaft part 134 and the side windup shaft part 144 are provided therebetween. It is difficult to house the center cover 132 and the side cover 142 in the holding parts 180 in a wound manner, which causes a gap between the drawn center cover 132 and side cover 142.

On the contrary, according to the cover apparatus for a vehicle 20 of the present embodiment, the adjoining center windup shaft part 34 and side windup shaft parts 44 are supported with the axes X1 and X2 being displaced from each other and end portions thereof overlapping each other in the directions of the axes X1 and X2 such that the side edges of the center cover 32 and the side covers 42 overlap each other in the drawn state. Therefore, the side edges of the center cover 32 and the side covers 42 overlap each other when those are drawn, which enables to shield the gaps therebetween.

Accordingly, it is possible to easily shield a gap between covers without, for example, connecting the covers with a fastener or the like as is conventional. Besides, when divided covers are connected to each other with a fastener or the like, the fastener is pulled toward the direction in which a gap is filled, leading to a feat that a gap may be generated at another spot (for example, a spot between a side cover and a side wall of a luggage compartment) different from the above-mentioned gap. It is not required in the present embodiment to pull covers as described above, which enables to shield a gap with more reliability.

Needless to say, the side edges of a plurality of covers are not required to completely overlap each other, and there may be generated a spot at which those do not partially overlap each other on the proximal end side or distal end side, at a partially notched portion or the like.

Moreover, the center windup shaft part 34 and the side windup shaft parts 44 are disposed with the axes X1 and X2 being displaced from each other along the vehicle front-rear direction being a drawing direction, which reduces the space for supporting and housing the center windup shaft part 34 and the side windup shaft parts 44 in up and down directions. The center windup shaft part 34 and the side windup shaft parts 44 house the center cover 32 and the side covers 42 in a wound manner in the same direction, and both side edges of the center cover 32 in the center windup shaft part 34 on the vehicle front side are disposed so as to cover the side edges on the center portion side in the vehicle width direction of the side cover 42 in the side windup shaft parts 44 on the vehicle rear side in an intimate contact manner, which reduces the gaps between the center cover 32 and the side covers 42 in the thickness direction. This prevents the inside of the luggage compartment 11 from being seen when viewed obliquely.

In addition, both side edges of the center cover 32 are disposed above side edges on the center portion side in the vehicle width direction of the pair of side covers 42, which enable to, for example, house the center cover 32 so as to be drawn and wound while keeping the state in which the side covers 42 are drawn.

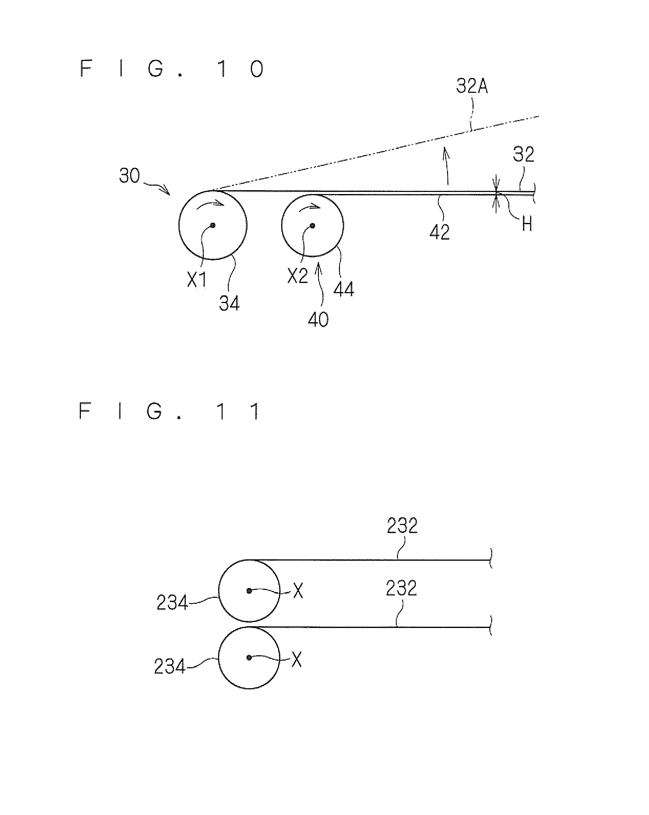

Further, the edge on the tip side in the drawing direction of the center cover 32 is interlocked with the back door 12. Accordingly, upon opening of the back door 12, the center cover 32 is drawn correspondingly, and at the same time, the edge on the tip side in the drawing direction of the center cover 32 is moved upwardly, which forms a space that can be accessed through a back door opening. On this occasion, as shown in FIG. 10, the back door 12 is opened/closed in the state in which the side covers 42 are drawn, whereby it is possible to draw and wind up the center cover 32 in the space above the luggage compartment 11.

The length of the center cover 32 wound around the center windup shaft part 34 on the vehicle front side being the upper side in the drawing direction is larger than the length of the side cover 42 wound around the side windup shaft part 44. For this reason, in the case where the center cover 32 and the side cover 42 are drawn, the center cover 32 is pulled more, and a reduction amount of the outer diameter of the center windup shaft part 34 from the state of being to be housed is larger than a reduction amount of the outer diameter of the side windup shaft part 44 from the state of being wound to be housed. Accordingly, when the center cover 32 and the side cover 42 are drawn, the position at which the center cover 32 is drawn from the center windup shaft part 34 becomes closer to the center axis X1 of the center windup shaft part 34, which reduces a gap H between the center cover 32 and the side cover 42. This enables to reduce the gap between the center cover 32 and the side cover 42 (preferably, provide intimate contact therebetween) more effectively (see FIG. 10).

The center cover 32 includes the narrow side edges 32Aa formed so as to become narrower than the edge on the tip side in the drawing direction, correspondingly to the back door opening that becomes gradually narrower upward, whereby it is possible to draw and wind up the center cover 32 in conjunction with opening/closing of the back door 12 while avoiding interference with the back door opening. Then, in the state in which the back door 12 is closed, the narrow side edges 32Aa of the center cover 32 overlap the inclined side edges 42Aa on the center portion side in the vehicle width direction of the pair of side covers 42, whereby the gaps therebetween can be shielded.

The side cover 42 is interlocked with the luggage compartment 11 at approximately the center (including the case of the center) in the axis X2 direction of the side windup shaft part 44 by means of the side interlocking part 46, and accordingly it is possible to support the side cover 42 by pulling while keeping balance side by side, which suppresses the side cover 42 from becoming wrinkled.

Further, the front cover windup part 60 is provided to the support member 50, which enables the front cover 62 to be integrated with the support member 50 as well in a compact manner. Moreover, the front cover 62 is wound to be housed, which provides easy access to the luggage compartment 11 from the room.

### <Modifications>

The configuration of the cover apparatus for a vehicle 20 according to the present invention is not limited to the example described in the embodiment above.

For example, the description has been given of the example in which the center cover windup part 30 and a pair of side cover windup parts 40 are provided as a plurality of cover windup parts, which is not necessarily limited thereto. For example, two cover windup parts obtained by dividing right and left into two may be provided. Alternatively, four or more cover windup parts may be provided by dividing into four or more. In short, it suffices that a plurality of cover windup parts are provided, and the above-mentioned configuration is applied between adjoining ones thereof.

Further, an arrangement example of a plurality of cover windup parts is not limited to the above-mentioned example. For example, as shown in FIG. 11, cover windup parts may be disposed such that center axes X of windup shaft parts 234 are displaced in the direction almost perpendicular to the plane (may be oblique direction) on which a cover 232 is drawn. As described above, also in this case, a plurality of covers 232 can be disposed with the side edges thereof overlapping each other in plan view. As described above, the case where a plurality of covers are extended along approximately the same plane includes the case where gaps are provided between a plurality of covers. In the case of FIG. 11, a gap between the covers 232 can be reduced more effectively by making the windup direction of the cover 232 around the windup shaft part 234 on the upper side opposite to the windup direction around the windup shaft part 234 on the lower side.

Further, the embodiment above has described the example in which the edge on the tip side in the drawing direction of the center cover 32 is interlocked with the back door 12 in a disengageable manner, which is not necessarily required. For example, the configuration may be made such that the edge on the tip side in the drawing direction of the center cover 32 is drawn by a hand or the like, and is interlocked with the vehicle rear portion or the like on the side wall of the luggage compartment 11.

Further, as described above, the cover apparatus for a vehicle per se is applicable as the configuration for covering various portions of a roof window, side window, rear window or the like in a planar fashion, in addition to the configuration for covering a luggage compartment.

While the cover apparatus for a vehicle has been shown and described in detail, the foregoing description is in all aspects illustrative, and the present invention is not limited thereto. That is, numerous modifications and variations can be devised in the described aspects without departing from the scope of the invention.

## Claims

1. A cover apparatus for a vehicle, comprising:
a plurality of cover windup parts each including a cover and a windup shaft part housing said cover so as to be drawn therefrom and wound therearound; and
a support member supporting said windup shaft parts of said plurality of cover windup parts so that said covers of said plurality of cover windup parts are drawn toward approximately the same direction in an approximately parallel state to be extendable along approximately the same plane,
wherein the adjoining windup shaft parts are supported with axes thereof being displaced from each other and end portions thereof overlapping each other in the axis directions thereof so that side edges of said adjoining covers in a state of being drawn overlap each other.

2. The cover apparatus for a vehicle according to claim 1, wherein the adjoining windup shaft parts are disposed so as to wind up and house said covers in the same windup direction, with the axes thereof being displaced from each other along the drawing directions of said covers.

3. The cover apparatus for a vehicle according to claim 1, wherein:
said plurality of cover windup parts include:
a center cover windup part including a center cover covering a center portion in a vehicle width direction of a luggage compartment of a vehicle; and
a pair of side cover windup parts including side covers covering side portions in the vehicle width direction of the luggage compartment of the vehicle, next to said center cover; and
both side edges of said center cover are disposed so as to respectively overlap side edges on a center portion side in the vehicle width direction of the side covers of said pair of side cover windup parts.

4. The cover apparatus for a vehicle according to claim 3, wherein:
a center interlocking part disengageable from a back door of the vehicle is provided at an end portion on a tip side in a drawing direction of said center cover; and
side interlocking parts disengageable from side walls of the luggage compartment of the vehicle are provided at end portions on a tip side in a drawing direction of said pair of side covers.

5. The cover apparatus for a vehicle according to claim 4, wherein:
said center cover includes, on both sides thereof, narrow side edges formed so as to be narrower than the end portions on the tip side in the drawing direction correspondingly to an opening for a back door of the vehicle, the opening becoming gradually narrower upward; and
the side edges on the center portion side in the vehicle width direction of said pair of side covers have a shape so as to respectively overlap said narrow side edges on the both sides of said center cover in a state in which said center cover and said pair of side covers are drawn.

6. The cover apparatus for a vehicle according to claim 3, wherein side interlocking parts disengageable from side walls of the luggage compartment of the vehicle are provided at edges on the tip side in the drawing direction of said pair of side covers, each of said side interlocking parts being positioned at approximately the center in the axis direction of said windup shaft part housing said side cover.

7. The cover apparatus for a vehicle according to claim 3, further comprising a front cover windup part including a front cover and a front cover windup shaft part housing said front cover so as to be drawn therefrom and wound therearound,
wherein said front cover windup shaft part is supported by the support member so that said front cover is extendable between said support member and a rear seat of the vehicle.
